# FASCICULE DE BREVET EUROPEEN

(11) **EP 4 348 074 B1**
(45) Date de publication et mention de la délivrance du brevet: **24.06.2026**
(21) Numéro de dépôt: 22733701.1
(22) Date de dépôt: 31.05.2022
(51) Int. Cl.: F16D 65/00, B60T 17/22

(54) **PROCÉDÉ D'ASPIRATION DES PARTICULES DE FREINAGE**
VERFAHREN ZUM ABSAUGEN VON BREMSPARTIKELN
METHOD FOR SUCTIONING BRAKING PARTICLES

(30) Priorité: 01.06.2021 FR 2105771
(43) Date de publication de la demande: 10.04.2024
(73) Titulaire: Tallano Technologies, 75015 Paris (FR); AKWEL, 01410 Champfromier (FR)
(72) Inventeur: ROCCA-SERRA, Christophe, 75016 PARIS (FR); ADAMCZAK, Loïc, 38390 MONTALIEU VERCIEU (FR)
(74) Mandataire: Plasseraud IP
(86) Numéro de dépôt international: PCT/FR2022/051031
(87) Numéro de publication internationale: WO 2022/254142

(56) Documents cités:
- DE-A1- 102018 209 714
- DE-B4- 102008 029 504
- FR-A1- 3 088 395

## Description

### Domaine technique

L'invention se rapporte aux systèmes d'aspiration des particules de freinage dans des systèmes de freinage à friction. De tels systèmes de freinage à friction peuvent équiper des véhicules routiers ou ferroviaires. De tels systèmes de freinage à friction peuvent aussi équiper des machines stationnaires à rotor comme des éoliennes ou des machines industrielles.

### Contexte et Art Antérieur

Dans de tels systèmes, comme par exemple décrit dans le document DE4240873, il est prévu une turbine d'aspiration et un filtre de collecte des particules. Les particules émanant de l'abrasion sont ainsi progressivement accumulées dans le filtre de collecte. Il s'ensuit un colmatage progressif du filtre et des conduites pneumatiques qui amènent jusqu'au filtre. Quand des plaquettes de friction sont utilisées, on peut prévoir des rainures d'aspiration aménagées dans le matériau de friction comme enseigné par la déposante par exemple dans le document FR3057040.

Le document FR3088395 a apporté une solution de pilotage adapté pour optimiser la commande de turbine sous freinage et signaler un état de colmatage du filtre.

Les inventeurs ont toutefois remarqué que les conduites pneumatiques avaient tendance à s'encrasser à la longue, en raison d'un petit dépôt de particules de freinage qui finissent par s'y accumuler.

La présente invention a pour objet de proposer une solution améliorée pour maintenir dans un état satisfaisant des conduites pneumatiques.

### Résumé de l'invention

A cet effet, il est proposé un procédé de commande pour un système d'aspiration des particules de freinage d'un système de freinage à friction, le système d'aspiration comprenant:
au moins une source de dépression, au moins une bouche d'aspiration agencée à proximité d'une interface de friction ou à l'intérieur d'une pièce à friction, et reliée par au moins une conduite pneumatique à la source de dépression, une unité de commande configurée pour commander la source de dépression, et un moyen de fourniture d'une information d'activation de freinage en cours,
le procédé prévoyant que l'unité de commande est configurée pour :
   **a-** commander la source de dépression (par exemple la rotation de la turbine), pour une séquence d'aspiration de freinage, en fonction de l'information d'activation de freinage en cours, pour assurer une aspiration dès lors (et aussi longtemps) qu'un freinage est activé,
   **b-** établir au moins une condition d'aspiration de nettoyage, en dehors des séquences de freinage,
   **c-** dès que l'au moins une condition d'aspiration de nettoyage vérifie un critère prédéterminé, commander la source de dépression (par exemple la rotation de la turbine) pour une séquence de nettoyage de l'au moins une conduite pneumatique, pendant une durée prédéterminée (TN).

Grâce à ces dispositions, on peut disposer d'une séquence à fort débit pneumatique, ce qui permet de nettoyer la ou les conduites pneumatiques. En roulage, un éventuel sifflement dû à cette opération est couvert par les bruits de roulement, étant donné que cette opération est réalisée lorsque le véhicule roule au-delà d'une vitesse seuil. On pourra aussi faire appel à une séquence de nettoyage pour des raisons de maintenance ou dans des conditions de diagnostic.

On note que les séquences d'aspiration de freinage sont réalisées à faible débit, alors qu'à l'inverse les séquences de nettoyage sont réalisées à fort débit, en ayant augmenté la section de passage limitante aéraulique au niveau de la bouche d'aspiration.

Sous le terme « interface de friction » on désigne une surface d'interface [plaquette contre disque] ou bien une surface d'interface [patin contre jante] et on couvre toutes les configurations de freinage à friction. De plus « à proximité » signifie que l'on aspire à proximité des surfaces d'interface ci-dessus mentionnées.

On note aussi que si on utilise des plaquettes de friction, les rainures d'aspiration aménagées dans le matériau de friction forment la bouche d'aspiration qui est alors agencée à l'intérieur de la pièce à friction que constitue la plaquette de friction.

Dans divers modes de réalisation de l'invention concernant le procédé, on peut éventuellement avoir recours en outre à l'une et/ou à l'autre des dispositions suivantes, prises isolément ou en combinaison.

Selon l'invention, à l'étape **b-,** la détermination de la condition d'aspiration de nettoyage est un calcul logique/algorithmique tenant compte de l'au moins un des arguments suivants :
- la vitesse courante du véhicule, notamment au-dessus d'un premier seuil de vitesse (V1),
- le temps écoulé depuis la dernière séquence de nettoyage,
- la distance parcourue depuis la dernière séquence de nettoyage
- le nombre de freinages dynamiques effectués depuis la dernière séquence de nettoyage,
- la prévalence d'un mode maintenance (mode garage ou mode diagnostic).

On utilise une telle condition multi-paramètres, multi critères pour décider de déclencher la séquence de nettoyage de la manière la plus optimisée possible, dit autrement on minimise le nombre de séquences de nettoyage par rapport à une efficacité recherchée du maintien en état des conduites/tuyaux.

On entend par freinage dynamique un freinage effectué alors que le véhicule n'est pas à vitesse nulle.

Selon une option, il peut être prévu qu'à l'étape c-, la source de dépression (e.g. la rotation de la turbine) est activée à puissance maximale. On maximise ainsi l'effet d'aspiration à haut débit pour décoller des particules qui se seraient déposées à l'intérieur des conduites.

Selon une option, il peut être prévu que la durée prédéterminée (TN) est choisie dans une plage entre 3 secondes et 15 secondes. Une telle durée s'avère suffisante et nécessaire pour provoquer un bon nettoyage des conduites.

Selon une option, la séquence de nettoyage est déclenchée, en dehors du mode maintenance, uniquement si la vitesse courante du véhicule est supérieure au premier seuil de vitesse. Ainsi, la séquence de nettoyage ne risque pas d'être perçue auditivement par un occupant du véhicule ou un passant, car son niveau sonore est couvert par le bruit de roulement.

Selon une option, la séquence de nettoyage (52) est déclenchée en réponse à une requête effectuée par un appareillage de diagnostic, au cours du mode maintenance. Ainsi, lors d'un échange des plaquettes de freins, conduite débranchée et sans plaquette, on peut utiliser l'outil diagnostic pour générer une séquence d'aspiration à vide avec aucune restriction aéraulique du côté de la plaquette.

Selon une option, la source de dépression est formée par une turbine entrainée par un moteur électrique (11), l'unité de commande (6) étant configurée pour commander le moteur électrique. Il s'agit d'une solution souple à l'usage, la vitesse de la turbine peut être ajustée en fonction du besoin d'aspiration.

Selon une option, l'unité de commande peut être configurée pour commander, pendant la séquence de nettoyage, une électrovanne de mise à l'air libre agencée sur le circuit pneumatique à proximité de la bouche d'aspiration. Ceci permet d'accroître encore le flux d'air à l'intérieur de la conduite pneumatique pendant la séquence nettoyage. Lorsque l'on active ladite électrovanne de mise à l'air libre, il n'y a plus de section limitante aéraulique coté interface de friction.

L'invention vise aussi un système d'aspiration des particules de freinage d'un système de freinage à friction, le système d'aspiration comprenant au moins une source de dépression (1), au moins une bouche d'aspiration (83) agencée à proximité d'une interface de friction ou à l'intérieur d'une pièce à friction, et reliée par au moins une conduite pneumatique à la source de dépression, une unité de commande (6) configurée pour commander la source de dépression, et un moyen de fourniture d'une information d'activation de freinage en cours, le système d'aspiration étant configuré pour mettre en œuvre le procédé tel que décrit précédemment.

Selon une option, le système peut comprendre en outre au moins un filtre (2) pour collecter les particules aspirées.

Selon une option, le système comprend un filtre centralisé et une turbine centralisée, reliés à quatre ou plus bouches d'aspiration. Dans cette configuration on a une certaine longueur pour les conduites pneumatiques, d'où l'intérêt de pouvoir les nettoyer de temps à autre.

Selon une option, il peut être prévu une électrovanne de mise à l'air libre (59) sur le circuit pneumatique et à proximité de la bouche d'aspiration. Une telle électrovanne permet d'accroître substantiellement le flux d'air à l'intérieur de la conduite pneumatique pendant la séquence nettoyage, ladite électrovanne permettant de faire communiquer la conduite pneumatique avec l'atmosphère (air libre) du côté de la bouche d'aspiration.

### Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- La figure 1 représente une vue de profil d'un exemple d'un organe de freinage à friction,
- La figure 2 représente un diagramme de principe d'un système d'aspiration des particules de freinage localisé pour une roue ou un essieu,
- La figure 3 représente un diagramme de principe d'un système d'aspiration des particules de freinage centralisé sur plusieurs roues ou essieux,
- La figure 4 représente un schéma de principe fonctionnel d'un système d'aspiration des particules de freinage,
- La figure 5 donne une illustration physique des composants du système d'aspiration des particules de freinage,
- La figure 6 représente un chronogramme illustrant au moins une fonctionnalité du système,
- La figure 7 représente un chronogramme sur une échelle de temps plus longue,
- La figure 8 représente un schéma de principe illustrant une conduite pneumatique,
- La figure 9 représente un autre schéma de principe illustrant une conduite pneumatique, avec une électrovanne de mise à l'air libre,
- La figure 10 représente une variante de diagramme de principe d'un système d'aspiration des particules de freinage.

### Description détaillée

Sur les différentes figures, les mêmes références désignent des éléments identiques ou similaires. Pour des raisons de clarté de l'exposé, certains éléments ne sont pas nécessairement représentés à l'échelle.

### Agencement général

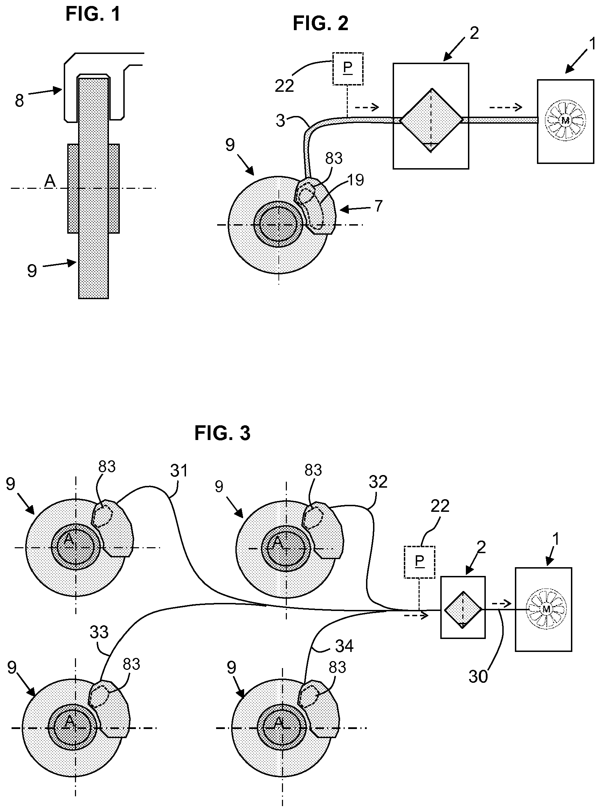

La figure 1 représente schématiquement un organe de freinage à friction. Dans le cas illustré, on a représenté un disque de frein **9** destiné à être rendu solidaire en rotation d'une roue (voire un essieu pour du matériel ferroviaire). Le disque **9** tourne autour de l'axe **A.** Selon l'art connu, on dispose un étrier **7** à cheval sur le disque et monté sur un support d'étrier. De plus, l'étrier comprend un piston configuré pour agir sur des patins de friction afin de prendre en sandwich le disque. Les patins de friction sont montés sur des plaquettes ou des semelles, tout ceci étant connu par ailleurs en soi et non décrit ici en détail. Les plaquettes sont repérées **19** et représentées en pointillé sur certaines vues.

Bien que l'on ait représenté un schéma de frein à disque, la présente invention convient également pour des freins à tambour, voire des systèmes de frein par patins appliqués directement sur la jante de roue.

À l'endroit des patins à friction, il est prévu un dispositif de captation **8** des particules qui s'en échappent. Plus particulièrement, on peut prévoir une bouche d'aspiration **83** pour chacun des patins à friction. On peut par exemple trouver un exemple dans le document FR3057040 du présent déposant, où les particules sont captées dans des rainures ménagées dans le matériau de friction. La bouche d'aspiration peut être formée par la (ou les) rainure(s) elle-même raccordée à un trou traversant dans la semelle de la garniture de friction et en communication avec un passage aval (vers le filtre).

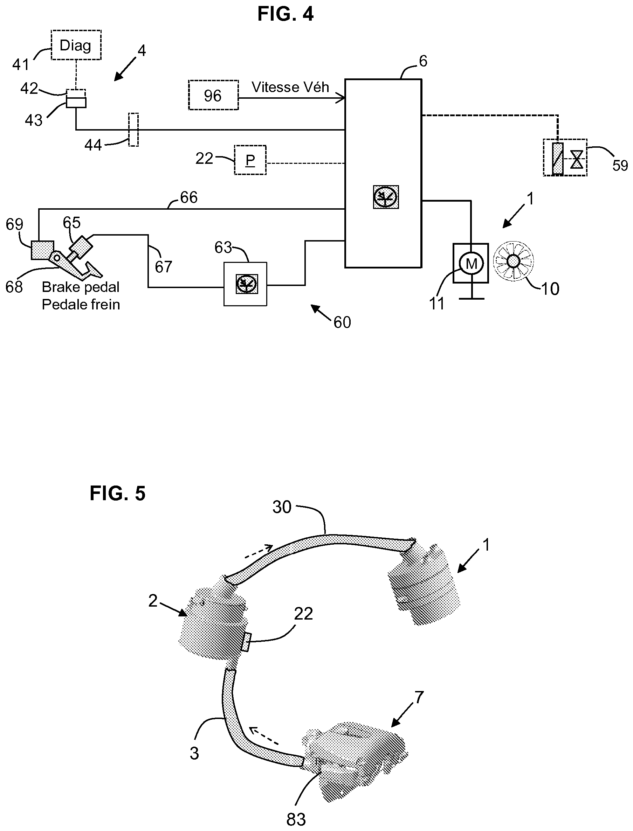

La bouche d'aspiration **83** est reliée à une source de dépression par un circuit pneumatique. Le circuit pneumatique peut comprendre une première conduite **3** et une deuxième conduite **30,** comme illustré schématiquement à la figure 5. Bien entendu, il peut y avoir une seule conduite 3 si le filtre et la turbine sont associés.

D'une façon générale, la bouche d'aspiration peut se trouver sur la trajectoire des particules à leur sortie de l'interface entre le patin et l'organe tournant (disque, tambour, jante...). C'est la dépression ou le débit créés à cet endroit qui contribue à une bonne captation.

Dans d'autres configurations, il peut être prévu un capotage auquel cas la bouche d'aspiration est formée par la sortie de l'espace recouvert par ledit capotage.

Il faut donc comprendre que la présente invention peut être appliquée quel que soit la configuration de la bouche d'aspiration **83.**

Typiquement pour une configuration de frein à disque, il y aura une bouche d'aspiration **83** de chaque côté du disque comme illustré à la figure 1.

La bouche d'aspiration (ou les bouches d'aspiration selon les cas) est reliée à un filtre **2** par une conduite fluide appelée ici première conduite 3, comme ceci est exemplifié à la figure 2. Le premier conduit **3** peut être formé comme une tuyauterie sans exclure un passage sous forme de tunnel au travers d'une pièce (par exemple le corps de l'étrier). Le premier conduit peut présenter une longueur plus ou moins importante, cette longueur peut aller de quelques dizaines de centimètres, par exemple 50 cm, jusqu'à plusieurs mètres dans une configuration de filtrage centralisé comme il est illustré à la figure 3.

D'une façon générale, la liaison fluidique entre la bouche d'aspiration et le filtre 2 peut comprendre une ou plusieurs dérivations, des raccords en T, en Y etc. Le terme de circuit pneumatique peut également être utilisé pour désigner les conduites fluides/tuyau d'air.

La liaison fluidique entre la bouche d'aspiration et le filtre **2** peut comprendre des portions rigides et des portions de conduite souples.

On peut trouver différentes configurations entre les bouches d'aspiration, le filtre et la source de dépression : on peut avoir un filtre pour chaque bouche d'aspiration (configuration décentralisée au maximum), voire pour chaque paire de bouches d'aspiration (Fig 2), mais on peut aussi avoir un seul filtre pour une pluralité de paires de bouches d'aspiration (Fig 3) (configuration dite centralisée), voire un seul filtre pour l'ensemble de véhicule. Ce choix peut être dicté par le type de véhicule, la durée de vie nécessaire pour le filtre avant colmatage, les diverses contraintes d'implantation dans le véhicule, etc.

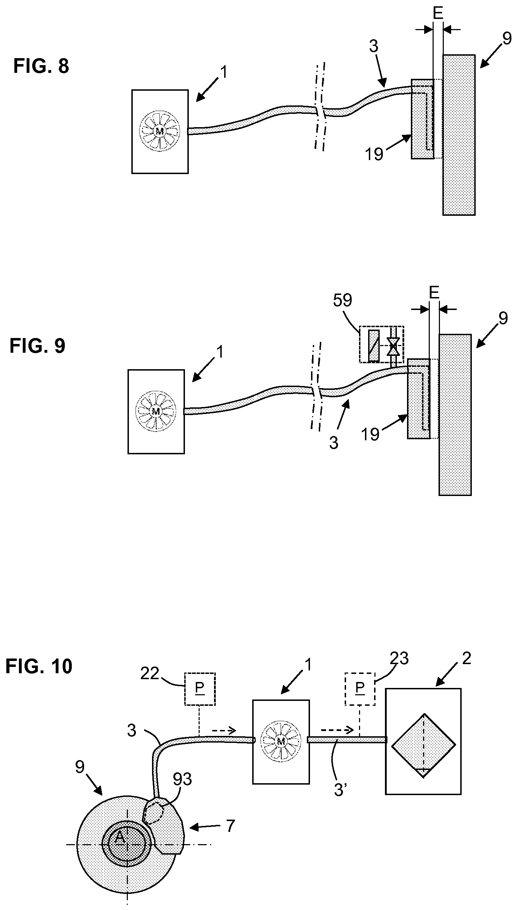

Sur les figures 2, 6 et 7, on a représenté une configuration en dépression, avec le filtre interposé entre le premier conduit **3** et la source de dépression **1** qui aspire les particules au travers du filtre que se trouve alors en dépression par rapport à la pression ambiante extérieure. Toutefois, dans une configuration représentée à la figure 10, la source de dépression (ici la turbine 1) peut être interposée entre le premier conduit 3 et le filtre, auquel cas la turbine aspire les particules puis la turbine les souffle dans le filtre via un conduit aval noté **3'** avec un second capteur **23** (optionnel). Dans ce cas, le filtre 2 est en surpression au lieu de dépression.

Le filtre **2** peut, dans un exemple type de réalisation, comprendre un média filtrant, de type papier ou autre, laissant passer l'air et piégeant les petites particules contenues dans le flux en provenance des bouches d'aspiration.

Le terme 'filtre' doit être compris ici largement, ce terme comprend des solutions de filtre centrifuge (type 'cyclone'), des solutions de filtre à technique de piégeage électromagnétique, des solutions de filtre à technique de piégeage électrostatique. Le terme 'filtre' inclut aussi une solution où les particules sont dirigées vers un filtre déjà existant comme le filtre à air habitacle ou vers le filtre du pot catalytique.

Le filtre à particules **2** est configuré pour filtrer de l'air provenant des bouches d'aspiration incluant des particules solides présentant des dimensions nanométriques ou micrométriques ou millimétriques, c'est-à-dire laisser l'air traverser le média filtrant alors que les particules ne traversent pas le média filtrant et y sont piégées. Au fil du temps, la quantité de particules piégées dans le média filtrant augmente, donc le filtre 2 fonctionne par accumulation et le passage de l'air devient moins aisé à travers le média filtrant au fur et à mesure.

Au fil du temps et des freinages, des particules se déposent dans la ou les conduites pneumatiques. La quantité cumulée augmente avec le temps et les freinages. Ce dépôt est variable selon la nature et la qualité du matériau de friction, selon les conditions climatiques rencontrées, etc....

Dans l'exemple illustré, la source de dépression **1** est formée par une turbine d'aspiration **10** entraînée par un moteur électrique **11.**

Dans l'exemple illustré, la turbine avec son moteur électrique forme une entité distincte du filtre. Dans ces conditions, il est prévu une seconde conduite fluide pneumatique **30** pour relier la turbine au filtre.

Il faut noter qu'une configuration avec la turbine et le filtre dans une seule entité est également possible.

Selon une disposition optionnelle, il peut être prévu en outre un capteur de pression **22** configuré pour mesurer la pression régnant dans le premier conduit 3. Sur le schéma de principe de la figure 2, le capteur de pression 22 est agencé sur le parcours du premier conduit 3 entre au moins une bouche d'aspiration et le filtre 2.

Toutefois dans une configuration alternative tout aussi préférée, le capteur de pression 22 est agencé de manière adjacente ou intégrée au filtre 2, comme illustré à la figure 5.

### Unité de commande

Le système d'aspiration comprend en outre une unité de commande **6** configurée pour piloter la turbine.

L'unité de commande **6** est une unité électronique capable de générer un signal de commande pour commander la vitesse du moteur qui entraîne la turbine selon une valeur quelconque entre la vitesse nulle et la vitesse maximale possible.

Selon un exemple, le moteur électrique **11** est alimenté par une tension continue, on peut prévoir que la logique de commande fasse appel à un signal modulé PWM (modulation de largeur d'impulsion). La tension continue utilisée peut dépendre du domaine d'application du système d'aspiration des particules, par exemple 12 Volts sur des véhicules automobiles classiques, 24 Volts sur des véhicules poids-lourds ou industriels de type camions ou autocars, ou encore 72 Volts sur du matériel ferroviaire (tramway, train).

Il faut noter ici qu'en lieu et place d'une turbine d'aspiration, la source de dépression peut être préexistante sur le véhicule, notamment pour le cas du domaine automobile une source de dépression induite par le fonctionnement du moteur du véhicule par exemple en dérivation de l'admission d'air, ou bien en autre exemple par l'utilisation d'un effet Venturi sur un flux de gaz sortant par exemple les gaz d'échappement. Pour le cas du domaine ferroviaire, la source de dépression peut être dérivée de l'équipement pneumatique de freinage ou d'un autre équipement auxiliaire du véhicule ferroviaire en question.

Selon une configuration, la valeur de dépression visée est choisie dans une plage de 20 à 100 millibars en dessous de la pression ambiante, autrement dit dans l'échelle des pressions absolues, la consigne de pression absolue dans le premier conduit peut être de 90% à 98% de la pression atmosphérique régnant au voisinage du système d'aspiration. On peut utiliser le capteur 22 pour asservir la consigne de vitesse de rotation de la turbine et ainsi la faire tourner au juste nécessaire.

Avantageusement, il est prévu un moyen **60** de fourniture d'une information d'activation de freinage en cours.

Dans certaines configurations de type de véhicule routier, il y a simplement un interrupteur binaire tout ou rien en interaction avec la pédale de frein **68.** Cet interrupteur peut délivrer une information **67** directement à l'unité de commande **6** du système d'aspiration ou bien via une unité de commande **63** de la fonction freinage par exemple celle qui gère la fonction ABS.

Selon une autre configuration, il peut être prévu une information plus riche, de type analogique ou numérique, reflétant précisément la position courante de la pédale de frein ce qui permet à l'unité de commande **6** de connaître d'une part l'intensité de freinage et d'autre part de pouvoir agir très précocement dès le début de l'action de l'utilisateur ou du conducteur sur la pédale de frein. Dans ce cas, il est prévu un potentiomètre **69** analogique ou numérisé, qui délivre une information riche **66** à destination de l'unité de commande 6 du système d'aspiration.

On note que si le véhicule routier est équipé d'aide à la conduite incluant de la conduite autonome ou une fonction freinage d'urgence, l'activation d'un freinage peut se produire sans que la pédale ne soit effectivement enfoncée, c'est alors un calculateur qui élabore et envoie l'information vers l'unité de commande **6** du système d'aspiration.

L'unité de commande **6** a donc à sa disposition une information d'activation de freinage en cours, soit binaire soit plus élaborée.

Dans un autre contexte, type ferroviaire, l'information d'activation de freinage en cours peut provenir de l'actionneur de freinage qui pilote le freinage à friction ci-dessus mentionné. L'actionneur de freinage peut être un manipulateur. Là aussi, il peut y avoir des déclenchements de freinage sans action sur le manipulateur, auquel cas c'est un calculateur qui élabore et envoie l'information vers l'unité de commande **6** du système d'aspiration.

Par ailleurs, l'unité de commande 6 reçoit une information concernant la vitesse courante du véhicule. Cette information de vitesse courante du véhicule peut lui être fournie par le calculateur de freinage **63** ou par un autre calculateur quelconque repéré **96** à la figure 4.

L'information « vitesse véhicule » peut être reçue par une liaison filaire ou par une liaison de type bus de données. On pourra utiliser un bus CAN ou J1939 pour un véhicule routier.

L'information « vitesse véhicule » est reçue sur une base régulière, e.g. rafraichie en quasi-temps réel. Par exemple un rafraîchissement au moins 10 fois par seconde peut être prévu.

Sur la figure 4, on a illustré un agencement de diagnostic **4,** qui permet à un outil de diagnostic de dialoguer avec l'unité de commande **6.** L'agencement de diagnostic **4** comprend un outil de diagnostic **41,** une fiche **43** à demeure sur le véhicule, une contrefiche **42** liée à l'outil de diagnostic **41** qui permet de connecter temporairement ce dernier aux calculateurs du véhicule. Les messages du dialogue de diagnostic peuvent le cas échéant transiter par une passerelle de communication **44.**

L'outil de diagnostic **41** peut être connecté sans fil, en mode 'wireless'. L'unité de commande **6** est alimentée électriquement par une tension continue fournie par le véhicule. Toutefois une alimentation sur batterie n'est pas exclue.

### Fonctionnement

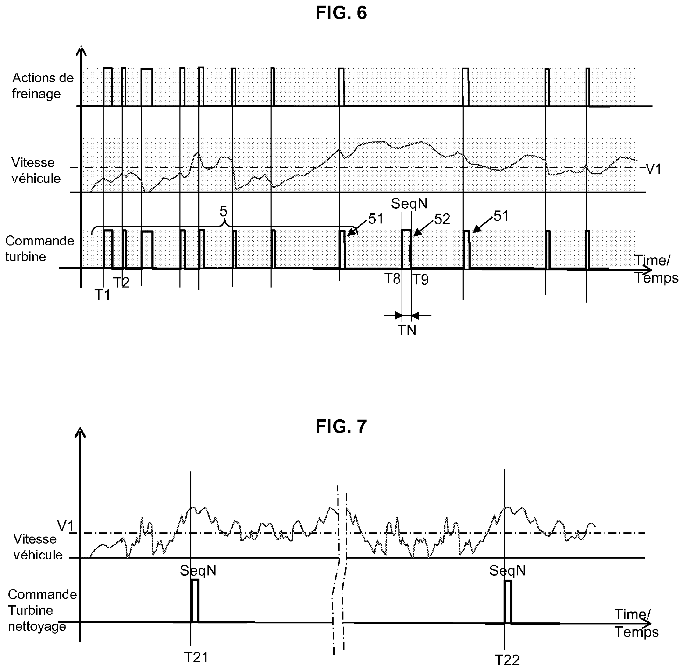

La figure 6 illustre un chronogramme sur une première échelle de temps (typiquement plusieurs dizaines de minutes ou quelques heures), alors que la figure 7 illustre un chronogramme sur une deuxième échelle de temps, plus longue, plusieurs heures ou plusieurs journées.

Tout d'abord on remarque que, d'une manière générale en roulage, dès lors qu'un freinage est activé (chronogramme du haut de la figure 6), l'unité de commande **6** commande la turbine pour une séquence d'aspiration de freinage **51.**

Dit autrement, une séquence d'aspiration de freinage **51** est mise en œuvre en fonction de l'information d'activation de freinage en cours, pour assurer une aspiration dès lors qu'un freinage est activé et aussi longtemps qu'un freinage est activé, ce pour autant que le véhicule roule.

Par exception, si la vitesse du véhicule est nulle, l'unité de commande **6** pourra s'abstenir de commander la turbine.

En roulage, l'ensemble des séquences d'aspiration de freinage **51** est repéré huit généralement **5** sur la figure 6, et les particules qui transitent dans la conduite pneumatique **3** peuvent s'y déposer pour certaines pendant les phases d'aspiration. On note que les durées des séquences d'aspiration de freinage, déclenchées aux moments **T1,T2** et suivants, sont éminemment variables, elles dépendent notamment de la durée d'activation du frein.

Avantageusement selon la présente proposition, il est prévu de procéder, indépendamment de toute activation de freinage, une séquence d'aspiration de nettoyage **SeqN** autrement appelée séquence de nettoyage **52** destinée à nettoyer la conduite pneumatique 3,30. La turbine est commandée par l'unité de commande **6** à la puissance maximale possible. La commande de nettoyage est appliquée pendant une durée prédéterminée **TN.** TN est choisie dans une plage entre 3 secondes et 15 secondes. Par exemple on peut choisir TN = 5 secondes, ou bien TN = 8 secondes ou encore TN = 10 secondes.

Les conditions pour déclencher une séquence de nettoyage vont être discutées ci-après.

On remarque que la séquence de nettoyage est effectuée lorsque la plaquette n'est pas appliquée fermement contre le disque. Comme illustré à la figure 8, hors action de freinage, la plaquette **19** n'est pas appliquée fermement contre le disque **9.** En pratique, hors action de freinage, on constate un petit intervalle libre de largeur **E** (dont la dimension a été intentionnellement exagérée sur les figures 8 et 9). Pour le cas d'un frein ferroviaire, cet espace libre peut être un peu plus important.

Dans le cas des bouches d'aspiration pratiquées dans les plaquettes, la présence de cet intervalle libre forme un passage pour de l'air. La section limitante du point de vue aéraulique est ainsi plus grande que lorsque la plaquette est appliquée fermement contre le disque.

En effet, lorsque la plaquette est appliquée fermement contre le disque, la section limitante du point de vue aéraulique est déterminée par la ou les rainures pratiquées dans la plaquette qui sont de faibles dimensions même s'il peut y avoir un évent d'entrée d'air. Les séquences d'aspiration de freinage sont réalisées essentiellement lorsque la plaquette est appliquée fermement contre le disque, de sorte que les séquences d'aspiration de freinage sont réalisées à faible débit d'air en raison d'une faible section limitante du point de vue aéraulique.

A l'inverse, grâce à la présence de l'intervalle libre mentionné plus haut, lorsque la plaquette n'est pas appliquée fermement contre le disque, les séquences de nettoyage sont réalisées à fort débit d'air. Ceci favorise un arrachement des particules qui avaient pu se déposer sur les parois internes de la conduite pneumatique. Une séquence de nettoyage permet de conserver intactes les parois intérieures de la conduite pneumatique. Ainsi, même après une durée de service importante de plusieurs années et/ou plusieurs centaines de milliers de kilomètres parcourus, la ou les conduites pneumatiques ne sont pas significativement obstruées.

La détermination de la condition d'aspiration de nettoyage est un calcul logique/algorithmique tenant compte d'un ou de plusieurs des arguments qui sont exposés ci-après.

La vitesse courante du véhicule est un argument principal. En roulage, une séquence de nettoyage n'est pas déclenchée si la vitesse du véhicule **VV** est inférieure à un premier seuil de vitesse **V1**. On peut choisir **V1** = 70 Km/h. En alternative, on peut choisir **V1** = 50 Km/h.

Par ailleurs, la distance parcourue depuis la dernière séquence de nettoyage est prise en compte. Par exemple, on déclenche une séquence de nettoyage après que le véhicule a parcouru DD1 = 50 Km depuis la dernière séquence de nettoyage. Dit autrement, après une séquence de nettoyage, l'unité de commande **6** s'abstient de commander une nouvelle séquence de nettoyage pendant les DD1 kilomètres suivants, DD1 étant un seuil prédéterminé. La distance parcourue **DD** n'a pas besoin d'être connue avec précision. La distance parcourue peut être obtenue par intégration de la vitesse véhicule. En alternative, elle peut être reçue depuis un autre calculateur par exemple le tableau de bord.

Le nombre de freinages dynamiques effectués depuis la dernière séquence de nettoyage est pris en compte. Par exemple, on déclenche une séquence de nettoyage après que **N1** séquences d'aspiration soient effectuées sur le véhicule. On peut choisir pour N1 une valeur comprise entre 50 et 200, par exemple N1 = 100.

Au lieu d'un simple nombre de freinage, on peut calculer un score cumulé de freinage **SCF,** où on applique un poids à chaque freinage. Plus le freinage est violent plus le poids est important. La puissance du freinage peut être déduite du gradient de vitesse (décroissance de la vitesse en fonction du temps).

On peut choisir comme critère pour déclencher une séquence de nettoyage le critère défini par la logique : [ SCF > SCF1 ou DD > DD1 ] et VV > VV1.

Le temps écoulé depuis la dernière séquence de nettoyage est pris en compte. Par exemple, on déclenche une séquence de nettoyage après que N2 jours se soit écoulés. On peut choisir pour N2 une valeur comprise entre 10 et 30 jours.

Comme illustré à la figure 7, une séquence de nettoyage est déclenchée à l'instant **T21** alors que la vitesse est supérieure **V1**. Après un certain temps qui peut être assez long au vu des critères ci-dessus mentionnés, une autre séquence nettoyage de nettoyage **T22,** là aussi lorsque la vitesse du véhicule est supérieure à **V1**.

Une séquence de nettoyage peut être également utilisé lors d'une phase de maintenance. Dans ce cas, la séquence de nettoyage **52** est déclenchée en réponse à une requête effectuée par un appareillage de diagnostic 41.

Ici on s'intéresse à l'opération de remplacement des plaquettes, par exemple lors d'une opération de maintenance dans un garage.

Généralement le véhicule ne roule pas, et le moteur thermique est non tournant.

L'unité de commande **6** reçoit une requête de diagnostic ad-hoc depuis l'outil de diagnostic, et commande la turbine à régime maximum pendant la séquence de nettoyage prescrite par la requête de diagnostic. La durée peut être TN ou plus courte. La durée TN peut être un paramètre de la requête diagnostic. On remarque que le mécanicien peut avoir un retour auditif de la rotation de la turbine à des fins de vérification de son bon fonctionnement.

Comme illustré à la figure 9, optionnellement, il peut être prévu une électrovanne de mise à l'air libre **59** raccordée fluidiquement sur le circuit pneumatique et à proximité de la bouche d'aspiration. Une telle électrovanne permet d'accroître substantiellement le flux d'air à l'intérieur de la conduite pneumatique pendant la séquence nettoyage.

L'unité de commande **6** peut être configurée pour commander, pendant la séquence de nettoyage, une électrovanne de mise à l'air libre **59** agencée sur le circuit pneumatique à proximité de la bouche d'aspiration.

Sur la figure 4, on a représenté l'option de cette électrovanne de mise à l'air libre **59** commandée par l'unité de commande **6.**

## Revendications

1. Procédé de commande pour un système d'aspiration des particules de freinage d'un système de freinage à friction, le système d'aspiration comprenant:
au moins une source de dépression (1), au moins une bouche d'aspiration (83) agencée à proximité d'une interface de friction ou à l'intérieur d'une pièce à friction, et reliée par au moins une conduite pneumatique à la source de dépression, une unité de commande (6) configurée pour commander la source de dépression, et un moyen de fourniture d'une information d'activation de freinage en cours,
le procédé prévoyant que l'unité de commande est configurée pour :
**a-** commander la source de dépression, pour une séquence d'aspiration de freinage (51), en fonction de l'information d'activation de freinage en cours, pour assurer une aspiration dès lors qu'un freinage est activé,
**b-** établir au moins une condition d'aspiration de nettoyage, en dehors des séquences de freinage,
**c-** dès que l'au moins une condition d'aspiration de nettoyage vérifie un critère prédéterminé, commander la source de dépression pour une séquence de nettoyage (52) de l'au moins une conduite pneumatique, pendant une durée prédéterminée (TN),
le procédé prévoyant que, à l'étape **b-,** la détermination de la condition d'aspiration de nettoyage est un calcul logique/algorithmique tenant compte de l'au moins un des arguments suivants :
- la vitesse courante du véhicule, notamment au-dessus d'un premier seuil de vitesse (V1),
- le temps écoulé depuis la dernière séquence de nettoyage,
- la distance parcourue depuis la dernière séquence de nettoyage
- le nombre de freinages dynamiques effectués depuis la dernière séquence de nettoyage,
- la prévalence d'un mode maintenance.

2. Procédé selon la revendication 1, dans lequel la séquence de nettoyage est déclenchée, en dehors du mode maintenance, uniquement si la vitesse courante du véhicule est supérieure au premier seuil de vitesse (V1).

3. Procédé selon l'une des revendications 1 à 2, dans lequel à l'étape c-, la source de dépression est activée à puissance maximale.

4. Procédé selon l'une des revendications 1 à 3, dans lequel la durée prédéterminée (TN) choisie dans une plage entre 3 secondes et 15 secondes.

5. Procédé selon la revendication 2, dans lequel le premier seuil de vitesse (V1) est supérieur à 50 Km/h et préférentiellement égal à 70 Km/h.

6. Procédé selon l'une des revendications 1 à 5, dans lequel la séquence de nettoyage (52) est déclenchée en réponse à une requête effectuée par un appareillage de diagnostic, au cours du mode maintenance.

7. Procédé selon l'une des revendications 1 à 6, dans lequel la source de dépression est formée par une turbine entrainée par un moteur électrique (11), l'unité de commande (6) étant configurée pour commander le moteur électrique.

8. Procédé selon l'une des revendications 1 à 6, dans lequel l'unité de commande (6) est configurée pour commander, pendant la séquence de nettoyage, une électrovanne de mise à l'air libre (59) agencée sur le circuit pneumatique à proximité de la bouche d'aspiration.

9. Système d'aspiration des particules de freinage d'un système de freinage à friction, le système d'aspiration comprenant au moins une source de dépression (1), au moins une bouche d'aspiration (83) agencée à proximité d'une interface de friction ou à l'intérieur d'une pièce à friction, et reliée par au moins une conduite pneumatique à la source de dépression, une unité de commande (6) configurée pour commander la source de dépression, et un moyen de fourniture d'une information d'activation de freinage en cours, le système d'aspiration étant **caractérisé en ce qu'**il est configuré pour mettre en œuvre le procédé selon l'une des revendications précédentes.

10. Système selon la revendication 9, comprenant en outre au moins un filtre (2) pour collecter les particules aspirées.

11. Système selon l'une des revendications 9 à 10, dans lequel le système comprend un filtre centralisé et une turbine centralisée, reliés à quatre ou plus bouches d'aspiration.

12. Système selon l'une des revendications 9 à 11, dans lequel il est prévu une électrovanne de mise à l'air libre (59) sur le circuit pneumatique et à proximité de la bouche d'aspiration.

## Patentansprüche

1. Steuerverfahren für ein Absaugsystem für Bremsstaubpartikel eines Reibungsbremssystems, wobei das Absaugsystem umfasst:
wenigstens eine Unterdruckquelle (1), wenigstens einen Ansaugstutzen (83), der in der Nähe einer Reibungsfläche oder innerhalb eines Reibungsteils angeordnet und über wenigstens eine pneumatische Leitung mit der Unterdruckquelle verbunden ist, eine Steuereinheit (6), die zur Steuerung der Unterdruckquelle ausgebildet ist, und ein Mittel zum Liefern einer Information über die aktuelle Bremsaktivierung, wobei das Verfahren vorsieht, dass die Steuereinheit dazu ausgebildet ist,
**a-** die Unterdruckquelle für eine Bremsabsaugsequenz (51) abhängig von der Information über die aktuelle Bremsaktivierung zu steuern, um eine Absaugung zu gewährleisten, sobald eine Bremsung aktiviert wird,
**b- wenigstens** eine Reinigungsabsaugbedingung außerhalb der Bremssequenzen festzulegen,
**c-** sobald die wenigstens eine Reinigungsabsaugbedingung ein vorbestimmtes Kriterium erfüllt, die Unterdruckquelle für eine Reinigungssequenz (52) der wenigstens einen pneumatischen Leitung während einer vorbestimmten Dauer (TN) zu steuern, wobei das Verfahren vorsieht, dass in Schritt **b-** die Bestimmung der Reinigungsabsaugbedingung eine logische/algorithmische Berechnung ist, die wenigstens eines der folgenden Argumente berücksichtigt:
- die aktuelle Geschwindigkeit des Fahrzeugs, insbesondere oberhalb eines ersten Geschwindigkeitsschwellenwertes (V1),
- die seit der letzten Reinigungssequenz verstrichene Zeit,
- die seit der letzten Reinigungssequenz zurückgelegte Strecke,
- die Anzahl der seit der letzten Reinigungssequenz durchgeführten dynamischen Bremsvorgänge,
- das Vorliegen eines Wartungsmodus.

2. Verfahren nach Anspruch 1, wobei die Reinigungssequenz außerhalb des Wartungsmodus nur dann ausgelöst wird, wenn die aktuelle Geschwindigkeit des Fahrzeugs über dem ersten Geschwindigkeitsschwellenwert (V1) liegt.

3. Verfahren nach einem der Ansprüche 1 bis 2, wobei in Schritt c- die Unterdruckquelle mit maximaler Leistung aktiviert wird.

4. Verfahren nach einem der Ansprüche 1 bis 3, wobei die vorbestimmte Dauer (TN) aus einem Bereich zwischen 3 Sekunden und 15 Sekunden gewählt wird.

5. Verfahren nach Anspruch 2, wobei der erste Geschwindigkeitsschwellenwert (V1) größer als 50 km/h und vorzugsweise gleich 70 km/h ist.

6. Verfahren nach einem der Ansprüche 1 bis 5, wobei die Reinigungssequenz (52) als Reaktion auf eine Anfrage eines Diagnosegeräts während des Wartungsmodus ausgelöst wird.

7. Verfahren nach einem der Ansprüche 1 bis 6, wobei die Unterdruckquelle durch eine von einem Elektromotor (11) angetriebene Turbine gebildet wird, wobei die Steuereinheit (6) dazu ausgebildet ist, den Elektromotor zu steuern.

8. Verfahren nach einem der Ansprüche 1 bis 6, wobei die Steuereinheit (6) dazu ausgebildet ist, während der Reinigungssequenz ein Entlüftungsmagnetventil (59) zu steuern, das in der Nähe der Ansaugöffnung am pneumatischen Kreislauf angeordnet ist.

9. System zum Absaugen von Bremsstaub aus einem Reibungsbremssystem, wobei das Absaugsystem umfasst: wenigstens eine Unterdruckquelle (1), wenigstens eine Ansaugöffnung (83), die in der Nähe einer Reibungsfläche oder innerhalb eines Reibungsteils angeordnet und über wenigstens eine pneumatische Leitung mit der Unterdruckquelle verbunden ist, eine Steuereinheit (6), die dazu ausgebildet ist, die Unterdruckquelle zu steuern, und eine Vorrichtung zur Bereitstellung einer Information über die aktuelle Bremsaktivierung, wobei das Absaugsystem **dadurch gekennzeichnet ist, dass** es dazu ausgebildet ist, das Verfahren nach einem der vorstehenden Ansprüche zu implementieren.

10. System nach Anspruch 9, das ferner wenigstens einen Filter (2) zum Auffangen der angesaugten Partikel umfasst.

11. System nach einem der Ansprüche 9 bis 10, wobei das System einen zentralen Filter und eine zentrale Turbine umfasst, die mit vier oder mehr Ansaugöffnungen verbunden sind.

12. System nach einem der Ansprüche 9 bis 11, wobei am pneumatischen Kreislauf und in der Nähe der Ansaugöffnung ein Entlüftungsmagnetventil (59) vorgesehen ist.

## Claims

1. Method for controlling a braking particle suction system of a friction braking system, the suction system comprising:
at least one negative pressure source (1), at least one suction mouth (83) arranged close to a friction interface or inside a friction part and connected by at least one pneumatic line to the negative pressure source, a control unit (6) configured to control the negative pressure source, and a means of supplying current braking activation information,
the method providing that the control unit is configured to:
**a-** control the negative pressure source, for a braking suction sequence (51), according to the current braking activation information, in order to ensure suction is applied as soon as braking is activated,
**b-** establish at least one cleaning suction condition, outside of the braking sequences,
**c-** as soon as the at least one cleaning suction condition satisfies a predetermined criterion, control the negative pressure source for a cleaning sequence (52) for the at least one pneumatic line, for a predetermined duration (TN),
the method providing that, in step **b-,** the determination of the cleaning suction condition is a logical/algorithmic calculation which takes into account at least one of the following variables:
- the current speed of the vehicle, in particular above a first speed threshold (V1),
- the time elapsed since the last cleaning sequence,
- the distance traveled since the last cleaning sequence,
- the number of dynamic braking actions carried out since the last cleaning sequence,
- the prevalence of a maintenance mode.

2. Method according to claim 1, wherein the cleaning sequence is triggered, outside of maintenance mode, only if the current speed of the vehicle is greater than the first speed threshold (V1).

3. Method according to one of claims 1 to 2, wherein, in step c-, the negative pressure source is activated to maximum power.

4. Method according to one of claims 1 to 3, wherein the predetermined duration (TN) is selected within a range of between 3 seconds and 15 seconds.

5. Method according to claim 2, wherein the first speed threshold (V1) is greater than 50 km/h and preferably equal to 70 km/h.

6. Method according to one of claims 1 to 5, wherein the cleaning sequence (52) is triggered in response to a request made by a diagnostic device during maintenance mode.

7. Method according to one of claims 1 to 6, wherein the negative pressure source is formed by a turbine driven by an electric motor (11), the control unit (6) being configured to control the electric motor.

8. Method according to one of claims 1 to 6, wherein the control unit (6) is configured to control, during the cleaning sequence, a vent solenoid valve (59) arranged on the pneumatic circuit close to the suction mouth.

9. Braking particle suction system of a friction braking system, the suction system comprising at least one negative pressure source (1), at least one suction mouth (83) arranged close to a friction interface or inside a friction part and connected by at least one pneumatic line to the negative pressure source, a control unit (6) configured to control the negative pressure source, and a means of supplying current braking activation information, the suction system being configured to implement the method according to one of the preceding claims.

10. System according to claim 9, further comprising at least one filter (2) for collecting the suctioned particles.

11. System according to one of claims 9 to 10, wherein the system comprises a centralized filter and a centralized turbine, which are connected to four or more suction mouths.

12. System according to one of claims 9 to 11, wherein a vent solenoid valve (59) is provided on the pneumatic circuit and close to the suction mouth.
